(19) Europäisches Patentamt / European Patent Office / Office européen des brevets

(11) **EP 2 559 982 B1**

(12) **EUROPÄISCHE PATENTSCHRIFT**

(45) Veröffentlichungstag und Bekanntmachung des Hinweises auf die Patenterteilung:
**09.05.2018   Patentblatt 2018/19**

(51) Int Cl.:
*G01K 1/02* (2006.01)      *G01K 7/16* (2006.01)
*G01R 27/02* (2006.01)      *G01R 27/08* (2006.01)
*G01R 27/14* (2006.01)

(21) Anmeldenummer: **12174891.7**

(22) Anmeldetag: **04.07.2012**

(54) **System und Verfahren zur Widerstandsbestimmung von drei temperaturabhängigen Widerständen**

System and method for measuring the resistance of three temperature-dependent resistances

Système et méthode de mesure de la résistance de trois résistances sensibles à la température

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2011   DE 102011079217**

(43) Veröffentlichungstag der Anmeldung:
**20.02.2013   Patentblatt 2013/08**

(73) Patentinhaber: **BSH Hausgeräte GmbH**
**81739 München (DE)**

(72) Erfinder:
• **Bauer, Hans-Jürgen**
  **83278 Traunstein (DE)**
• **Hofmann, Johann**
  **83374 Traunwalchen (DE)**
• **Lappat, Hans**
  **84518 Garching a.d. Alz (DE)**

(56) Entgegenhaltungen:
**DE-A1-102009 058 387      DE-T2- 69 300 966**

• **Frauke Bähnck ET AL: "Automatisierte Wicklungsprüfung an Drehstromaggregaten - Am geschlossenen Motor die Wicklung prüfen", technica, die Fachzeitschrift für die Maschinen-, Elektro- und Metallindustrie, Sept. 2009, 1. September 2009 (2009-09-01), Seiten 65-68, XP055177617, Gefunden im Internet: URL:http://www.technica-online.ch/fileadmin/technica-online.ch/documents/Bilder/wagner.pdf [gefunden am 2015-03-18]**

**Beschreibung**

Die Erfindung betrifft System aufweisend einen Mehrkerntemperaturfühler mit einer Schaltung zur Messung von drei temperaturabhängigen Widerständen nach Anspruch 1 und ein Verfahren zur Widerstandsbestimmung von drei temperaturabhängigen Widerständen nach Anspruch 6. Es sind Kerntemperaturfühler mit einem Temperaturwiderstand, sogenannte Einpunkt-Kerntemperaturfühler, bekannt. Der hierbei eingesetzte Widerstand ist temperaturabhängig. Üblicherweise wird hierfür ein Heißleiter (auch bezeichnet als NTC-Widerstand) verwendet. Ein solcher Heißleiter hat bei niedriger Temperatur einen hohen Widerstand und bei hoher Temperatur einen niedrigen Widerstand. Auch ist ein sogenannter Kaltleiter (auch bezeichnet als PTC-Widerstand) bekannt, der bei niedriger Temperatur einen geringeren Widerstand als bei hoher Temperatur aufweist.
Aus dem Widerstandswert des Heißleiters oder des Kaltleiters kann die Temperatur des Messfühlers bzw. des Messpunkts am Ort des Messfühlers ermittelt werden.
Der Einpunkt-Kerntemperaturfühler erfordert zur Messung des Temperaturwertes eine zweipolige Verbindung zu einer Messelektronik.

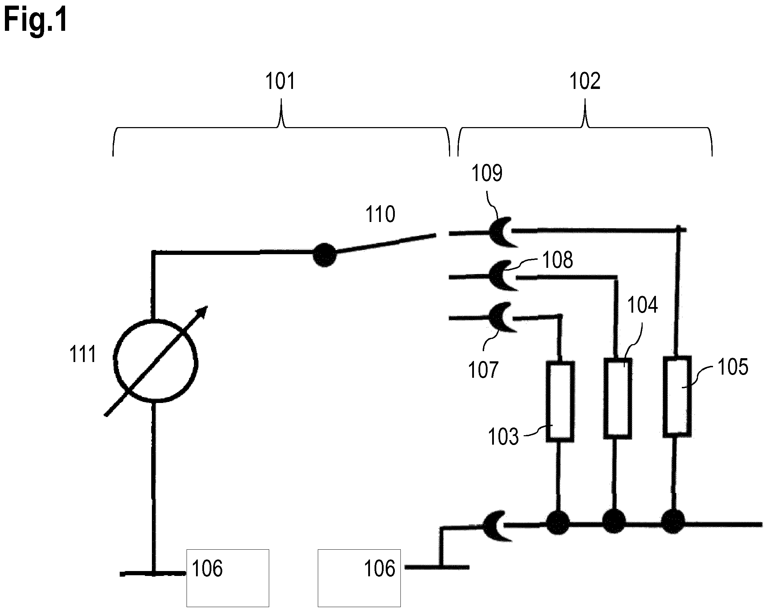

Ferner sind Mehrpunkt-Kerntemperaturfühler bekannt, die mehrere Messpunkte besitzen. Fig.1 zeigt eine bekannte Schaltungsanordnung mit einer Messelektronik 101 und einem Dreipunkt-Kerntemperaturfühler 102, der über einen von drei Anschlüssen zeitweise mit der Messelektronik 101 verbunden ist. Der Dreipunkt-Kerntemperaturfühler 102 weist drei temperaturabhängige Widerstände 103, 104 und 105 auf, die auf der einen Seite mit Massepotential 106 verbunden sind und jeweils auf der anderen Seite einen Anschluss 107, 108 und 109 aufweisen. Somit wird zur Auswertung der drei Widerstände 103 bis 105 eine vierpolige Steckverbindung (umfassend die Anschlüsse 107 bis 109 und Massepotential) benötigt.

Für die Messung der Widerstände 103 bis 105 wird über einen Schalter 110 jeweils einer der Widerstände 103 bis 105 mit einem Messwerk 111 verbunden und der jeweils verbundene Widerstand zwischen Massepotential 106 und dem kontaktierten Anschluss gemessen. Diese Schaltungsanordnung benötigt für einen Dreipunkt-Kerntemperaturfühler 102 eine vierpolige Steckverbindung zu der Messelektronik 101.

DE 693 0 966 T2 offenbart einen Backofen zur Behandlung von Nahrungsmitteln, mit einem Temperaturmesser zum Einstecken in ein zu erhitzendes Nahrungsmittel, wobei der Temperaturmesser die Form eines Stabes hat und an seiner Spitze und längs zumindest an einer weiteren Position einen Temperatursensor trägt und der Temperaturmesser mit einer Steuereinrichtung zur Steuerung des Behandlungsprozesses in dem Backofen verbindbar ist, wobei zusammen mindestens drei Temperatursensoren an dem Temperaturmesser vorgesehen und geeignet voneinander beabstandet sind, die Steuereinrichtung so ausgestaltet ist, daß die Steuerung des Behandlungsprozesses auf der niedrigsten Temperatur, die durch die Sensoren ermittelt wird, basiert. Es können drei Sensoren vorgesehen sein, die sternförmig miteinander verbunden sind, wobei die drei Verbindungspunkte, die durch die freien Enden der Sensoren gebildet werden, mit ihren jeweiligen Kontaktbereichen auf einem Anschluss verbunden sind, der nach Art eines Telefonsteckers eine standardisierte Gestalt hat. Es können auch drei Sensoren vorgesehen sein, die dreiecksförmig miteinander verbunden sind, wobei die drei Verbindungspunkte mit dem jeweiligen Kontaktbereich auf einem Anschluss verbunden sind und die Steuereinrichtung so ausgestaltet ist, dass sie mittels bekannter Umrechnungsformeln eine Transformation der Dreiecksverbindung in eine Sternverbindung durchführen kann, um die Widerstandswerte der einzelnen Sensoren zu ermitteln.

DE 10 2009 058 387 A1 offenbart ein Verfahren und eine Vorrichtung zur Ermittlung von Leitungswiderständen bei Dreileiterschaltung mit Widerstandsthermometern. Hierzu wird der Messwiderstand mit Kurzschlussbrücken kurzgeschlossen und am Leitungsende die Widerstände zyklisch gemessen. Mit einem Gleichungssystem lassen sich hieraus die tatsächlichen Leitungswiderstände berechnen und Messfehler beseitigen.

Hierbei ist es von Nachteil, dass ein aufwändiger und teurer vierpoliger Stecker und entsprechend eine vierpolige Buchse benötigt werden.

Die **Aufgabe** der Erfindung besteht darin, den vorstehend genannten Nachteil zu vermeiden und insbesondere eine effiziente Möglichkeit zur Kontaktierung eines Mehrpunkt-Temperaturfühlers anzugeben.

Diese Aufgabe wird gemäß den Merkmalen der unabhängigen Patentansprüche gelöst. Weiterbildungen der Erfindung ergeben sich auch aus den abhängigen Ansprüchen. Zur Lösung der Aufgabe wird ein System angegeben, aufweisend

- einen Mehrkerntemperaturfühler mit einer Schaltung zur Messung von drei temperaturabhängigen Widerständen und
- ein Hausgerät, das eine Messelektronik sowie eine Kontaktiermöglichkeit in Form einer dreipoligen Buchse oder eines dreipoligen Steckers für den Mehrkerntemperaturfühler aufweist,

wobei

- die drei Widerstände in Form einer Sternschaltung angeordnet sind, indem ein Pin jedes der drei Widerstände mit einem Sternknoten und der jeweilige andere Pin jedes der drei Widerstände mit einem der drei Anschlüsse verbunden ist,
- die drei Widerstände über drei Anschlüsse mit der Messelektronik kontaktierbar sind,
- mittels elektronischer Schalter der Messelektronik die drei Widerstände über ihre Anschlüsse verbindbar sind,
- anhand unterschiedlicher Messungen zu unterschiedlichen Zeitpunkten mittels der Messelektronik die Widerstandswerte der Widerstände bestimmbar sind,
- einer der Anschlüsse mit Massepotential verbunden ist und
- mittels der Messelektronik die Anschlüsse über zwei elektronische Schalter so verbindbar sind, dass Messwiderstandswerte R12, R23 und R13 für die drei Widerstände A, B und C wie folgt ermittelbar sind:

$$R13 = A + C$$

$$R23 = B + C$$

$$R123 = C + (A \parallel B)$$

sowie
- basierend auf den Messwiderstandswerten R12, R23 und R123 die drei Widerstandswerte A, B und C wie folgt ermittelbar sind:

$$A = R13 - C,$$

$$B = R23 - C,$$

$$C = R123 - \sqrt{R123^2 - R123 \cdot R13 + R23 \cdot R13 - R23 \cdot R123}$$

oder mittels der Messelektronik die Anschlüsse über drei so verbindbar sind, dass die Messwiderstandswerte R12, R23 und R123 wie folgt ermittelbar sind:

$$R12 = A + B$$

$$R23 = A + C$$

$$R123 = C + (A \parallel B)$$

sowie

- basierend auf den Messwiderstandswerten R12, R23 und R123 die drei Widerstandswerte A, B und C wie folgt ermittelbar sind:

$$A = \sqrt{R12 \cdot (R23 - R123)}$$

$$B = R12 - A$$

$$C = R23 - A.$$

Bei den elektronischen Schaltern kann es sich um durch die Messelektronik aktivierbare und deaktivierbare Schalter oder Schaltfunktionen handeln. Beispielsweise können Transistoren oder Relais vorgesehen sein, die anhand der Messelektronik angesteuert werden. Beispielsweise kann die Messelektronik eine Prozessor- oder sonstige Verarbeitungseinheit aufweisen, die die elektronischen Schalter ansteuert und die Messwerte bestimmt, z.B. aufnimmt.

Die Messelektronik kann anhand der unterschiedlichen Stellungen der elektronischen Schalter zu verschiedenen Zeiten verschiedene Messungen durchführen, wobei jeweils eine bestimmte Anordnung der Widerstände aus der Stellung der elektronischen Schalter resultiert. Aus verschiedenen Anordnungen ergeben sich die unterschiedlichen Messungen, die zur Lösung eines Gleichungssystems mit dem Widerstandswerten der drei Widerstände verwendet werden.

Die Messelektronik kann eine Verarbeitungseinheit, insbesondere eine Prozessoreinheit und/oder eine zumindest teilweise festverdrahtete oder logische Schaltungsanordnung sein. Die Messelektronik kann insbesondere jede Art von Prozessor oder Rechner oder Computer mit entsprechend notwendiger Peripherie (Speicher, Input/Output-Schnittstellen, Ein-Ausgabe-Geräte, etc.) sein oder umfassen.

Somit ist es möglich, eine kostengünstige Schaltungsanordnung für die Auswertung eines Mehrpunkt-Kerntemperaturfühlers vorzusehen. Die Kontaktierung bzw. unterschiedliche Beschaltung der drei Widerstände kann anhand der Anschlüsse z.B. mit einem dreipoligen Stecker und einer dreipoligen Buchse erfolgen.

Eine Weiterbildung ist es, dass die drei Widerstände temperaturabhängige Widerstände, insbesondere Heißleiter oder Kaltleiter, sind.

Hierbei besteht vorteilhaft die Möglichkeit, die kleinste an einem der Widerstände auftretende Temperatur mit hoher Genauigkeit zu ermitteln.

Das Hausgerät kann insbesondere ein Gargerät oder einen Ofen sein, mit einer Kontaktiermöglichkeit für den hier genannten Mehrkerntemperaturfühler, wobei die Kontaktiermöglichkeit eine dreipolige Buchse oder einen dreipoligen Stecker umfasst.

Zusätzlich wird die obige Aufgabe gelöst anhand eines Verfahrens zur Widerstandsbestimmung von drei Widerständen, die in Form einer Sternschaltung angeordnet sind und die Teil des Kerntemperaturfühlers des obigen Systems sind,

- bei dem die drei Widerstände über drei Anschlüsse mittels elektronischer Schalter der Messelektronik elektrisch kontaktiert werden,
- bei dem anhand unterschiedlicher Messungen zu unterschiedlichen Zeitpunkten die Widerstandswerte der drei Widerstände ermittelt werden.

Eine Weiterbildung besteht darin, dass für die ermittelten Widerstandswerte zugehörige Temperaturwerte bestimmt werden.

Auch ist es eine Ausgestaltung, dass anhand der Temperaturwerte ein Gargerät gesteuert wird.

Das Verfahren kann beispielsweise in einer Elektronik oder Steuereinheit des Gargeräts implementiert sein.

Die vorstehenden Ausführungen zu den Vorrichtungen gelten für das hier erwähnte Verfahren entsprechend.

Die hierin vorgestellte Lösung umfasst ferner ein Computerprogrammprodukt, das direkt in einen Speicher eines digitalen Computers ladbar ist, umfassend Programmcodeteile die dazu geeignet sind, Schritte des hier beschriebenen Verfahrens durchzuführen.

Weiterhin wird das oben genannte Problem gelöst mittels eines computerlesbaren Speichermediums, z.B. eines beliebigen Speichers, umfassend von einem Computer ausführbare Anweisungen (z.B. in Form von Programmcode) die dazu geeignet sind, dass der Computer Schritte des hier beschriebenen Verfahrens durchführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:

Fig.2    eine beispielhafte Schaltungsanordnung eines nicht erfindungsgemäßen Kerntemperaturfühlers mit drei Messpunkten, wobei die temperaturabhängigen Widerstände des Kerntemperaturfühlers in einer Dreiecksschaltung angeordnet sind;

Fig.3    eine alternative nicht erfindungsgemäße Variante der Schaltungsanordnung gemäß Fig.2, bei der vier Schalter anstatt der in Fig.2 gezeigten sechs Schalter vorgesehen sind;

Fig.4    eine weitere beispielhafte nicht erfindungsgemäße Schaltungsanordnung eines Kerntemperaturfühlers mit drei Messpunkten, wobei die temperaturabhängigen Widerstände des Kerntemperaturfühlers in Form einer Sternschaltung angeordnet sind;

Fig.5    eine erfindungsgemäße Variante der Schaltungsanordnung gemäß Fig.4, bei der drei Schalter anstatt der in Fig.4 gezeigten vier Schalter vorgesehen sind;

Fig.6    eine erfindungsgemäße Variante der Schaltungsanordnung gemäß Fig.4, bei der zwei Schalter anstatt der in Fig.4 gezeigten vier Schalter vorgesehen sind.

Es wird vorgeschlagen, anstatt einer vierpoligen Verbindung mit einer dreipoligen Verbindung für den Anschluss eines Dreipunkt-Temperaturfühlers auszukommen. Durch den Einsatz eines dreipoligen anstatt eines vierpoligen Steckers und einer entsprechenden Buchse ergeben sich deutliche Kostenvorteile, reduzierte Weiterhin wird das oben genannte Problem gelöst mittels eines computerlesbaren Speichermediums, z.B. eines beliebigen Speichers, umfassend von einem Computer ausführbare Anweisungen (z.B. in Form von Programmcode) die dazu geeignet sind, dass der Computer Schritte des hier beschriebenen Verfahrens durchführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:

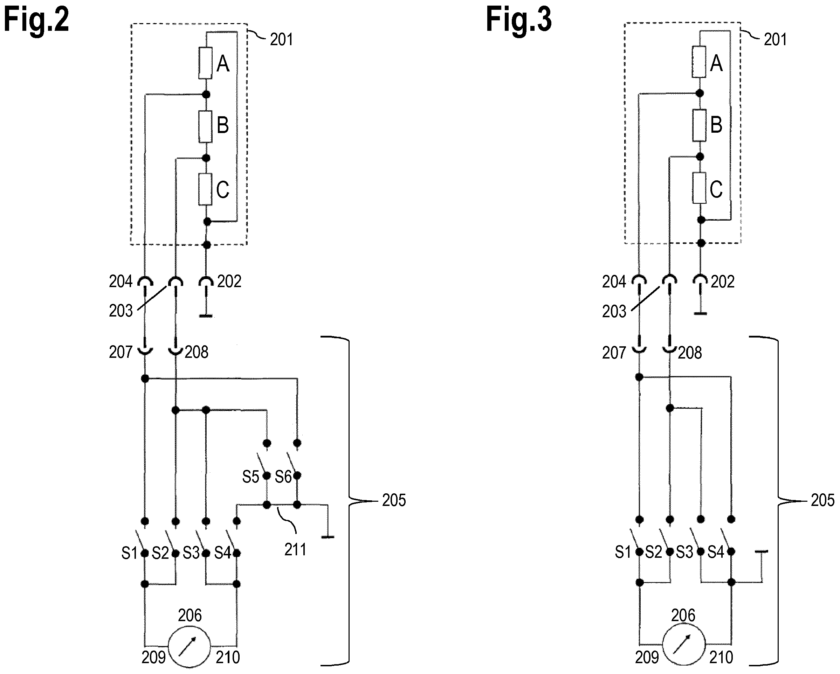

Fig.2    eine beispielhafte Schaltungsanordnung eines Kerntemperaturfühlers mit drei Messpunkten, wobei die temperaturabhängigen Widerstände des Kerntemperaturfühlers in einer Dreiecksschaltung angeordnet sind;

Fig.3    eine alternative Variante der Schaltungsanordnung gemäß Fig.2, bei der vier Schalter anstatt der in Fig.2 gezeigten sechs Schalter vorgesehen sind;

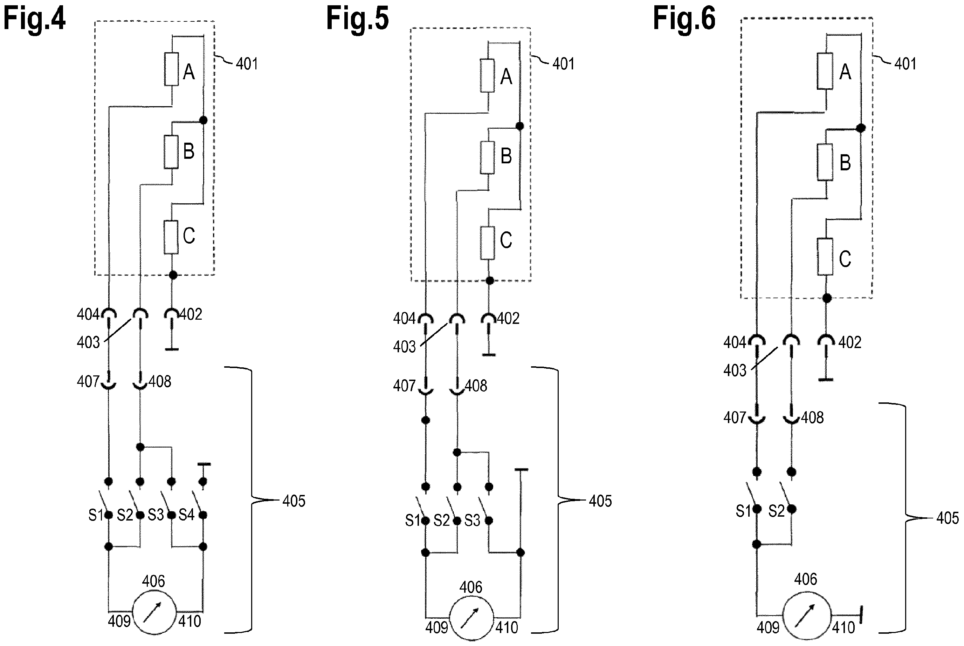

Fig.4    eine weitere beispielhafte Schaltungsanordnung eines Kerntemperaturfühlers mit drei Messpunkten, wobei die temperaturabhängigen Widerstände des Kerntemperaturfühlers in Form einer Sternschaltung angeordnet sind;

Fig.5    eine alternative Variante der Schaltungsanordnung gemäß Fig.4, bei der drei Schalter anstatt der in Fig.4 gezeigten vier Schalter vorgesehen sind;

Fig.6    eine alternative Variante der Schaltungsanordnung gemäß Fig.4, bei der zwei Schalter anstatt der in Fig.4 gezeigten vier Schalter vorgesehen sind.

Es wird vorgeschlagen, anstatt einer vierpoligen Verbindung mit einer dreipoligen Verbindung für den Anschluss eines Dreipunkt-Temperaturfühlers auszukommen. Durch den Einsatz eines dreipoligen anstatt eines vierpoligen Steckers und einer entsprechenden Buchse ergeben sich deutliche Kostenvorteile, reduzierte Anforderungen an Toleranzen sowie geringere Anforderungen an den benötigten Bauraum. Auch ist es von Vorteil, dass auf günstige standardisierte dreipolige Stecker und Buchsen zurückgegriffen werden kann.

Der Dreipunkt-Temperaturfühler des nachfolgenden Beispiels umfasst drei Widerstände A, B und C, die unterschiedlich verschaltet sind. Beispielsweise können die Widerstände A, B und C in einer Dreiecksschaltung oder in einer Sternschaltung angeordnet sein.

Vorzugsweise werden Brücken vorgesehen, anhand derer drei Messungen durchgeführt werden können. Aus den einzelnen Messungen kann auf die (insbesondere temperaturabhängigen) Werte der Widerstände A, B und C rückgeschlossen werden, z.B. mittels einer Verarbeitungseinheit (z.B. eines Prozessors) einer Herdelektronik.

Nachfolgend sind beispielhaft einige Schaltungsvarianten gezeigt. Eine bestimmte Schaltungsvariante kann abhängig von der Frage ausgewählt werden, wie viele (elektronische) Schalter (z.B. Transistoren, Relais, steuerbare Ausgänge eines Controllers oder Prozessors) benötigt werden und/oder wie sich die Genauigkeit der Messung verhält.

Die Schaltung ermöglicht insbesondere eine möglichst genaue Messung des Messpunkts mit der geringsten Temperatur, also desjenigen temperaturabhängigen Widerstands, der den geringsten Temperaturwert misst. Dies bedeutet bei der Verwendung von PTC-Widerständen einen geringen Widerstandswert und bei der Verwendung von NTC-Widerständen einen hohen Widerstandswert.

Vorzugsweise wird bei dem Einsatz von PTC-Widerständen eine Reihenschaltung dieser Widerstände vermieden und bei dem Einsatz von NTC-Widerständen eine Parallelschaltung solcher Widerstände vermieden.

**Fig.2** zeigt eine beispielhafte Schaltungsanordnung eines Kerntemperaturfühlers 201 mit drei Messpunkten. Ein mit Massepotential verbundener Anschluss 202 ist über eine Reihenschaltung der Widerstände C, B und A wieder mit sich selbst verbunden. Ein Anschluss 203 ist mit einem Knoten zwischen den Widerständen C und B und ein Anschluss 204 ist mit einem Knoten zwischen den Widerständen B und A verbunden.

Die Anschlüsse 202 bis 204 sind über eine dreipolige Buchse-Stecker-Verbindung mit einer Messelektronik 205 verbunden, die mehrere Schalter S1 bis S6 sowie ein Messwerk 206 (mit einem Anschluss 209 und einem Anschluss 210) aufweist. Insofern weist auch die Messelektronik drei Anschlüsse auf, von denen einer mit Massepotential verbunden ist (nicht in Fig.2 dargestellt). Ein Anschluss 207 ist mit dem Anschluss 204 und ein Anschluss 208 ist mit dem Anschluss 203 verbindbar.

Der Anschluss 207 ist über den Schalter S1 mit dem Anschluss 209 und über den Schalter S6 mit einem Knoten 211 verbunden, wobei der Knoten 211 auf Massepotential liegt. Der Anschluss 208 ist über den Schalter S2 mit dem Anschluss 209, über den Schalter S3 mit dem Anschluss 210 und über den Schalter S5 mit dem Anschluss 211 verbunden. Weiterhin ist der Knoten 211 über den Schalter S4 mit dem Anschluss 210 verbunden.

In diesem Schaltungsbeispiel sind die Widerstände A, B und C so angeordnet, dass sich eine Dreiecksschaltung ergibt. Die drei Leitungen der Dreiecksschaltung sind mit den Anschlüssen 202 bis 204 verbunden, die Leitung, die mit dem Anschluss 202 verbunden ist, ist geerdet (Massepunkt).

Das Messwerk 206 kann über die elektronischen Schaltern S1 bis S6 mit dem Kerntemperaturfühler 201 verbunden werden. Die Schalter S1 bis S6 werden z.B. über eine Verarbeitungseinheit (z.B. einen Mikrocontroller oder einen Prozessor) so geschaltet, dass jeweils eine Parallelschaltung aus einem Einzelwiderstand mit einem weiteren Einzelwiderstand bzw. mit der Serienschaltung zweier Einzelwiderstände mit dem Messwerk 206 verbunden wird.

Zur Bestimmung der einzelnen Widerstände A, B und C und damit zur Ermittlung der Temperaturen an den drei Messpunkten der Widerstände A, B und C, werden drei einzelne Messungen wie folgt durchgeführt:

- Messung 1: Die Schalter S2, S4 und S6 werden geschlossen, damit wird der Anschluss 204 auf Massepotential gelegt. An dem Messwerk 206 wird ein Widerstandswert R12 gemessen.
- Messung 2: Die Schalter S1, S4 und S5 werden geschlossen, der Anschluss 203 wird auf Massepotential gelegt. An dem Messwerk 206 wird ein Widerstandswert R13 gemessen.
- Messung 3: Die Schalter S1 und S3 werden geschlossen, nur der Anschluss 202 liegt auf Massepotential. An dem Messwerk 206 wird ein Widerstandswert R23 gemessen.

Der Widerstand R12 entspricht dem Widerstand zwischen den Anschlüssen 202 und 203, wenn der Anschluss 204 auf Massepotential liegt.

Der Widerstand R13 entspricht dem Widerstand zwischen den Anschlüssen 202 und 204, wenn der Anschluss 203 auf Massepotential liegt.

Der Widerstand R23 entspricht dem Widerstand zwischen den Anschlüssen 203 und 204, wenn der Anschluss 202 auf Massepotential liegt.

Aus der Schaltung ergeben sich somit mit den vorstehenden Messungen die folgenden drei Gleichungen:

$$R12 = A \parallel B \tag{1}$$

$$R13 = B \parallel C \tag{2}$$

$$R23 = B \parallel (A + C) \tag{3}$$

Dabei bedeutet das Zeichen "∥" eine Parallel-Schaltung, also

$$X \parallel Y = X * Y / (X + Y).$$

Die Gleichungen (1) bis (3) stellen ein Gleichungssystem mit drei Unbekannten (A, B und C) und drei bekannten Größen (R12, R13 und R23) dar. Zur weiteren Berechnung werden anstatt der Widerstandswerte die Leitwerte Y (mit Y = 1/R) verwendet:

$$Y12 = 1 / R12$$

$$Y13 = 1 / R13$$

$$Y23 = 1 / R23$$

Die Lösung dieses Gleichungssystems lautet:

$$B = \frac{1}{Y23 - \sqrt{Y23^2 - Y23 \cdot Y13 - Y12 \cdot Y23 + Y12 \cdot Y13}} \qquad (4)$$

$$C = 1 / (Y13 - 1/B) \qquad (5)$$

$$A = 1 / (Y12 - 1/B) \qquad (6)$$

Die Quadratwurzel der Gleichung (4) kann z.B. von einem digitalen Mikroprozessor sehr einfach mittels einer bekannten, schnell konvergierenden Iteration durchgeführt werden.

Aufgrund der Parallelschaltungen gemäß den Gleichungen (1) bis (3) ist diese Variante von Vorteil, wenn PTC-Widerstände als temperaturabhängige Widerstände A, B und C verwendet werden. Denn dann lässt sich in der Parallelschaltung der kleinste Widerstandswert mit der größten Genauigkeit messen.

**Fig.3** zeigt eine alternative Variante der Schaltungsanordnung gemäß Fig.2, bei der vier Schalter S1 bis S4 anstatt der in Fig.2 gezeigten sechs Schalter vorgesehen sind.

Der Kerntemperaturfühler 201 hat den gleichen Aufbau sowie die gleichen Anschlüsse 202 bis 204 gemäß Fig.2. Die Anschlüsse 202 bis 204 sind über eine dreipolige Buchse-Stecker-Verbindung mit der Messelektronik 205 verbunden, die jetzt die Schalter S1 bis S4 sowie das Messwerk 206 (mit dem Anschluss 209 und dem Anschluss 210) aufweist. Der Anschluss 207 ist mit dem Anschluss 204 und der Anschluss 208 ist mit dem Anschluss 203 verbindbar.

Der Anschluss 207 ist über den Schalter S1 mit dem Anschluss 209 und über den Schalter S4 mit dem Anschluss 210 verbunden. Der Anschluss 208 ist über den Schalter S2 mit dem Anschluss 209 und über den Schalter S3 mit dem Anschluss 210 verbunden. Der Anschluss 210 ist weiterhin mit Massepotential verbunden.

Es wird vorgeschlagen, drei Messungen wie folgt durchzuführen:

- Messung 1: Die Schalter S1 und S2 werden geschlossen, damit werden die Anschlüsse 203 und 204 kurzgeschlossen, an dem Messwerk 206 wird ein Widerstandswert R12 gemessen.
- Messung 2: Die Schalter S1 und S3 werden geschlossen, damit werden die Anschlüsse 202 und 203 kurzgeschlossen, an dem Messwerk 206 wird ein Widerstandswert R13 gemessen.
- Messung 3: Die Schalter S2 und S4 werden geschlossen, damit werden die Anschlüsse 202 und 204 kurzgeschlossen, an dem Messwerk 206 wird ein Widerstandswert R23 gemessen.

Aus der Schaltung ergeben sich somit mit den vorstehenden Messungen die folgenden drei Gleichungen:

$$R12 = A \parallel C \qquad (7)$$

$$R13 = B \parallel C \qquad (8)$$

$$R23 = B \parallel A \qquad (9)$$

Unter Verwendung der Leitwerte ergibt sich als Lösung des Gleichungssystems für die Einzelwiderstände:

$$C = 2 / (Y13 + Y12 - Y23) \qquad (10)$$

$$A = 1 / (Y12 - C) \qquad (11)$$

$$B = 1 / (Y13 - C) \qquad (12)$$

Diese Lösung hat gegenüber der Schaltungsvariante gemäß Fig.2 den Vorteil, dass ein resultierender Fehler für die Einzelwiderstände gleich dem Messfehler bei den Einzelmessungen ist, während sich in dem Ausführungsbeispiel gemäß Fig.2 der Messfehler aufgrund der Quadratwurzel quadratisch fortpflanzt. Weiterhin ist bei der Lösung gemäß Fig.3 die Berechnung der Einzelwiderstände weniger aufwändig.

Aufgrund der Parallelschaltungen werden für beide Varianten gemäß Fig.2 und Fig.3 vorteilhaft PTC-Widerstände als temperaturabhängige Widerstände eingesetzt, um in der Parallelschaltung den kleinsten Widerstandswert mit der größten Genauigkeit messen zu können.

**Fig.4** zeigt eine weitere beispielhafte Schaltungsanordnung eines Kerntemperaturfühlers 401 mit drei Messpunkten. Ein mit Massepotential verbundener Anschluss 402 ist über einen Widerstand C mit einem Knoten 411 verbunden, ein Anschluss 403 ist über einen Widerstand B mit dem Knoten 411 verbunden und ein Anschluss 404 ist über einen Widerstand A mit dem Knoten 411 verbunden.

Die Anschlüsse 402 bis 404 sind über eine dreipolige Buchse-Stecker-Verbindung mit einer Messelektronik 405 verbunden, die mehrere Schalter S1 bis S4 sowie ein Messwerk 406 (mit einem Anschluss 409 und einem Anschluss 410) aufweist. Insofern weist auch die Messelektronik drei Anschlüsse auf, von denen einer mit Massepotential verbunden ist (nicht in Fig.4 dargestellt). Ein Anschluss 407 ist mit dem Anschluss 404 und ein Anschluss 408 ist mit dem Anschluss 403 verbindbar.

Der Anschluss 407 ist über den Schalter S1 mit dem Anschluss 409 verbunden. Der Anschluss 408 ist über den Schalter S2 mit dem Anschluss 409 und über den Schalter S3 mit dem Anschluss 410 verbunden. Weiterhin ist der Anschluss 410 über den Schalter S4 mit dem Massepotential verbunden.

Somit können die drei Widerstände A, B und C in einer Sternschaltung mit nicht kontaktiertem Sternpunkt angeordnet werden.

Es wird vorgeschlagen, drei Messungen wie folgt durchzuführen:

- Messung 1: Die Schalter S2 und S4 werden geschlossen, an dem Messwerk 406 wird ein Widerstandswert R12 gemessen.
- Messung 2: Die Schalter S1 und S3 werden geschlossen, an dem Messwerk 406 wird ein Widerstandswert R23 gemessen.
- Messung 3: Die Schalter S1 und S4 werden geschlossen, an dem Messwerk 406 wird ein Widerstandswert R13 gemessen.

Aus der Schaltung ergeben sich somit mit den vorstehenden Messungen die folgenden drei Gleichungen:

$$R12 = B + C \qquad (13)$$

$$R23 = A + B \qquad (14)$$

$$R13 = A + C \qquad (15)$$

Als Lösung des Gleichungssystems ergibt sich für die Einzelwiderstände:

$$A = (R13 + R23 - R12) / 2 \qquad (16)$$

$$B = (R12 + R13 - R23) / 2 \qquad (17)$$

$$C = (R12 + R23 - R13) / 2 \qquad (18)$$

Diese Schaltungsvariante benötigt nur vier Schalter S1 bis S4. Dieses Schaltungsbeispiel ist von Vorteil, wenn NTC-Widerstände als temperaturabhängige Widerstände A, B und C verwendet werden, weil die Einzelmessungen die Serienschaltung der Einzelwiderstände gemäß den Gleichungen (13) bis (15) erfassen. Damit ist die kleinste Temperatur mit größter Genauigkeit bestimmbar. Da bei dem NTC-Widerstand eine niedrige Temperatur einen großen Widerstandswert bedeutet, kann in der Serienschaltung der größte Widerstand mit der größten Genauigkeit bestimmt werden.

**Fig.5** zeigt eine erfindungsgemäße alternative Variante der Schaltungsanordnung gemäß Fig.4, bei der drei Schalter S1 bis S3 anstatt der in Fig.4 gezeigten vier Schalter vorgesehen sind.

Der Kerntemperaturfühler 401 hat den gleichen Aufbau sowie die gleichen Anschlüsse 402 bis 404 gemäß Fig.4. Die Anschlüsse 402 bis 404 sind über eine dreipolige Buchse-Stecker-Verbindung mit der Messelektronik 405 verbunden, die jetzt die Schalter S1 bis S3 sowie das Messwerk 406 (mit dem Anschluss 409 und dem Anschluss 410) aufweist. Der Anschluss 407 ist mit dem Anschluss 404 und der Anschluss 408 ist mit dem Anschluss 403 verbindbar.

Der Anschluss 407 ist über den Schalter S1 mit dem Anschluss 409 verbunden. Der Anschluss 408 ist über den Schalter S2 mit dem Anschluss 409 und über den Schalter S3 mit dem Anschluss 410 verbunden. Der Anschluss 410 ist weiterhin mit Massepotential verbunden.

Es wird vorgeschlagen, drei Messungen wie folgt durchzuführen:

- Messung 1: Der Schalter S1 und der Schalter S3 werden geschlossen, an dem Messwerk 406 wird ein Widerstandswert R12 gemessen.
- Messung 2: Der Schalter S1 wird geschlossen, an dem Messwerk 406 wird ein Widerstandswert R23 gemessen.
- Messung 3: Der Schalter S1 und der Schalter S2 werden geschlossen, an dem Messwerk 406 wird ein Widerstandswert R123 gemessen.

Aus der Schaltung ergeben sich somit mit den vorstehenden Messungen die folgenden drei Gleichungen:

$$R12 = A + B \tag{19}$$

$$R23 = A + C \tag{20}$$

$$R123 = C + (A \parallel B) \tag{21}$$

Als Lösung des Gleichungssystems ergibt sich für die Einzelwiderstände:

$$A = \sqrt{R12 \cdot (R23 - R123)} \tag{22}$$

$$B = R12 - A \tag{23}$$

$$C = R23 - A \tag{24}$$

Mit dieser Schaltungsvariante können vorteilhaft die niedrigsten Temperaturen von drei NTC-Widerständen ermittelt werden. Auch ist es von Vorteil, dass das Messwerk 406 potentialbehaftet messen kann, d.h. ein Pol des Messwerks 406 führt eine Messung in Bezug auf Massepotential durch.

**Fig.6** zeigt eine erfindungsgemäße alternative Variante der Schaltungsanordnung gemäß Fig.4, bei der zwei Schalter S1 und S2 anstatt der in Fig.4 gezeigten vier Schalter vorgesehen sind.

Der Kerntemperaturfühler 401 hat den gleichen Aufbau sowie die gleichen Anschlüsse 402 bis 404 gemäß Fig.4. Die Anschlüsse 402 bis 404 sind über eine dreipolige Buchse-Stecker-Verbindung mit der Messelektronik 405 verbunden, die jetzt die Schalter S1 und S2 sowie das Messwerk 406 (mit dem Anschluss 409 und dem Anschluss 410) aufweist. Der Anschluss 407 ist mit dem Anschluss 404 und der Anschluss 408 ist mit dem Anschluss 403 verbindbar.

Der Anschluss 407 ist über den Schalter S1 mit dem Anschluss 409 verbunden. Der Anschluss 408 ist über den Schalter S2 mit dem Anschluss 409 verbunden. Der Anschluss 410 ist weiterhin mit Massepotential verbunden.

Es wird vorgeschlagen, drei Messungen wie folgt durchzuführen:

- Messung 1: Der Schalter S1 wird geschlossen, an dem Messwerk 406 wird ein Widerstandswert R13 gemessen.
- Messung 1: Der Schalter S2 wird geschlossen, an dem Messwerk 406 wird ein Widerstandswert R23 gemessen.
- Messung 1: Der Schalter S1 und der Schalter S2 werden geschlossen, an dem Messwerk 406 wird ein Widerstandswert R123 gemessen.

Aus der Schaltung ergeben sich somit mit den vorstehenden Messungen die folgenden drei Gleichungen:

$$R13 = A + C \tag{25}$$

$$R23 = B + C \tag{26}$$

$$R123 = C + (A \| B) \tag{27}$$

Als Lösung des Gleichungssystems ergibt sich für die Einzelwiderstände:

$$A = R13 - C \tag{28}$$

$$B = R23 - C \tag{29}$$

$$C = R123 - \sqrt{(R123^2 - R123 \cdot R13 + R23 \cdot R13 - R23 \cdot R123)} \tag{30}$$

Hierbei sei angemerkt, dass die vorgeschlagenen Lösungen nicht nur zur Messung von Temperaturen verwendet werden können, sondern grundsätzlich für jede Art von Widerstandsmessung einsetzbar sind.

Insbesondere ist es ein Vorteil, dass ein einfacherer und kostengünstiger dreipoliger Stecker für einen Dreipunkt-Temperaturfühler eingesetzt werden kann. Dies reduziert den erforderlichen Bauraum und vermindert Toleranzprobleme bei Stecker-Buchsen-Kombinationen, die eine geringere Anzahl von Polen aufweisen. Weiterhin werden Leitungen eingespart und es müssen weniger Leitungen kontaktiert werden.

**Bezugszeichenliste**

101 Messelektronik
102 Dreipunkt-Kerntemperaturfühler
103 temperaturabhängiger Widerstand
104 temperaturabhängiger Widerstand
105 temperaturabhängiger Widerstand
106 Massepotential
107 Anschluss
108 Anschluss
109 Anschluss
110 Schalter
111 Messwerk

A (temperaturabhängiger) Widerstand, z.B. PTC-Widerstand oder NTC-Widerstand
B (temperaturabhängiger) Widerstand, z.B. PTC-Widerstand oder NTC-Widerstand

C  (temperaturabhängiger) Widerstand, z.B. PTC-Widerstand oder NTC-Widerstand
201  Kerntemperaturfühler
202  Anschluss
203  Anschluss
204  Anschluss
205  Messelektronik
206  Messwerk
207  Anschluss
208  Anschluss
209  Anschluss des Messwerks
210  Anschluss des Messwerks
211  Knoten
401  Kerntemperaturfühler
402  Anschluss
403  Anschluss
404  Anschluss
405  Messelektronik
406  Messwerk
407  Anschluss
408  Anschluss
409  Anschluss des Messwerks
410  Anschluss des Messwerks

**Patentansprüche**

1. System, aufweisend

   - einen Mehrkerntemperaturfühler mit einer Schaltung (401) zur Messung von drei temperaturabhängigen Widerständen (A, B, C) und
   - ein Hausgerät, das eine Messelektronik (405) sowie eine Kontaktiermöglichkeit in Form einer dreipoligen Buchse oder eines dreipoligen Steckers für den Mehrkerntemperaturfühler (401) aufweist,

   wobei

   - die drei Widerstände (A, B, C) über drei Anschlüsse (402-404) mit der Messelektronik (405) kontaktierbar sind,
   - die drei Widerstände (A, B, C) in Form einer Sternschaltung (401) angeordnet sind, indem ein Pin jedes der drei Widerstände (A, B, C) mit einem Sternknoten und der jeweilige andere Pin jedes der drei Widerstände (A, B, C) mit einem der drei Anschlüsse (402-404) verbunden ist,
   - **dadurch gekennzeichnet, dass**: mittels elektronischer Schalter (S1-S2 oder S1-S3) der Messelektronik (405) die drei Widerstände (A, B, C) über ihre Anschlüsse (402-404) verbindbar sind,
   - anhand unterschiedlicher Messungen zu unterschiedlichen Zeitpunkten mittels der Messelektronik (405) die Widerstandswerte der Widerstände (A, B, C) bestimmbar sind,
   - einer der Anschlüsse (402) mit Massepotential verbunden ist und
   - mittels der Messelektronik (405) die Anschlüsse über zwei elektronische Schalter (S1, S2) so verbindbar sind, dass Messwiderstandswerte R12, R23 und R13 für die drei Widerstände A, B und C wie folgt ermittelbar sind:

$$R13 = A + C$$

$$R23 = B + C$$

$$R123 = C + (A \,||\, C)$$

   sowie

- basierend auf den Messwiderstandswerten R12, R23 und R123 die drei Widerstandswerte A, B und C wie folgt ermittelbar sind:

$$A = R13 - C,$$

$$B = R23 - C,$$

$$C = R123 - \sqrt{R123^2 - R123 \cdot R13 + R23 \cdot R13 - R23 \cdot R123}$$

oder mittels der Messelektronik die Anschlüsse über drei so verbindbar sind, dass die Messwiderstandswerte R12, R23 und R123 wie folgt ermittelbar sind:

$$R12 = A + B$$

$$R23 = A + C$$

$$R123 = C + (A \parallel B)$$

sowie
- basierend auf den Messwiderstandswerten R12, R23 und R123 die drei Widerstandswerte A, B und C wie folgt ermittelbar sind:

$$A = \sqrt{R12 \cdot (R23 - R123)}$$

$$B = R12 - A$$

$$C = R23 - A.$$

2. System nach Anspruch 1, bei der die drei temperaturabhängigen Widerstände Heißleiter oder Kaltleiter sind.

3. System nach einem der vorhergehenden Ansprüche, bei dem die Messelektronik drei elektronischen Schalter (S1-S3) aufweist und

- ein erster Anschluss (407) der Messelektronik (405) über einen ersten Schalter (S1) mit einem ersten Anschluss (409) eines Messwerks (406) verbunden ist,
- ein zweiter Anschluss (408) der Messelektronik (405) über einen zweiten Schalter (S2) mit dem ersten Anschluss (409) des Messwerks (406) verbunden ist,
- der zweite Anschluss (408) der Messelektronik (405) über einen dritten Schalter (S3) mit einem zweiten Anschluss (409) des Messwerks (406) und der zweite Anschluss (409) des Messwerks (406) mit Masse verbunden ist.

4. System nach einem Ansprüche 1 oder 2, bei dem die Messelektronik zwei elektronischen Schalter (S1-S2) aufweist und

- ein erster Anschluss (407) der Messelektronik (405) über einen ersten Schalter (S1) mit einem ersten Anschluss (409) eines Messwerks (406) verbunden ist,
- ein zweiter Anschluss (408) der Messelektronik (405) über einen zweiten Schalter (S2) mit dem ersten Anschluss (409) des Messwerks (406) verbunden ist,
- der zweite Anschluss (409) des Messwerks (406) mit Masse verbunden ist.

**5.** System nach einem der vorhergehenden Ansprüche, bei dem das Hausgerät ein Gargerät oder Ofen ist.

**6.** Verfahren zur Widerstandsbestimmung von drei temperaturabhängigen Widerständen, die in Form einer Sternschaltung angeordnet sind und die Teil eines Kerntemperaturfühlers eines Systems nach einem der vorhergehenden Ansprüche sind,

- bei dem die drei Widerstände über drei Anschlüsse mittels elektronischer Schalter der Messelektronik elektrisch kontaktiert werden und
- bei dem anhand unterschiedlicher Messungen zu unterschiedlichen Zeitpunkten die Widerstandswerte der drei Widerstände ermittelt werden.

**7.** Verfahren nach Anspruch 6, bei dem für die ermittelten Widerstandswerte zugehörige Temperaturwerte bestimmt werden.

**8.** Verfahren nach Anspruch 7, bei dem anhand der Temperaturwerte ein Gargerät gesteuert wird.

**Claims**

**1.** System having

- a multi-core temperature sensor with a circuit (401) for measuring three temperature-dependent resistors (A, B, C) and
- a domestic appliance, which has an electronic measuring system (405) and a contacting option in the form of a three-pole bushing or a three-pole connector for the multi-core temperature sensor (401),

wherein

- the three resistors (A, B, C) can be contacted by way of three terminals (402-404) with the electronic measuring system (405),
- the three resistors (A, B, C) are arranged in the form of a star circuit (401), by a pin of each of the three resistors (A, B, C) being connected to a star node and the respective other pin of each of the three resistors (A, B, C) being connected to one of the three terminals (402-404),

**characterised in that**

- by means of electronic switches (S1-S2 or S1-S3) of the electronic measuring system (405) the three resistors (A, B, C) can be connected by way of their terminals (402-404),
- on the basis of different measurements the resistance values of the resistors (A, B, C) can be measured at different points in time by means of the electronic measuring system (405),
- one of the terminals (402) is connected to earth potential and
- by means of the electronic measuring system (405) the terminals can be connected by way of two electronic switches (S1, S2) such that measuring resistance values R12, R23 and R13 for the three resistors A, B and C can be measured as follows:

$$R13 = A + C$$

$$R23 = B + C$$

$$R123 = C + (A \parallel C)$$

and

- based on the measuring resistance values R12, R23 and R123, the three resistance values A, B and C can be measured as follows:

$$A = R13 - C,$$

$$B = R23 - C,$$

$$C = R123 - \sqrt{R123^2 - R123 \cdot R13 + R23 \cdot R13 - R23 \cdot R123}$$

or by means of the electronic measuring system the terminals can be connected by way of three such that the measuring resistance values R12, R23 and R123 can be measured as follows

$$R13 = A + B$$

$$R23 = A + C$$

$$R123 = C + (A \parallel B)$$

and

- based on the measuring resistance values R12, R23 and R123, the three resistance values A, B and C can be measured as follows:

$$A = \sqrt{R12 \cdot (R23 - R123)}$$

$$B = R12 - A$$

$$C = R23 - A$$

2. System according to claim 1, in which the three temperature-dependent resistors are NTC or PTC thermistors.

3. System according to one of the preceding claims, in which the electronic measuring system has three electronic switches (S1-S3) and

- a first terminal (407) of the electronic measuring system (405) is connected by way of a first switch (S1) to a first terminal (409) of a measuring element (406),
- a second terminal (408) of the electronic measuring system (405) is connected by way of a second switch (S2) to the first terminal (409) of the measuring element (406),
- the second terminal (408) of the electronic measuring system (405) is connected by way of a third switch (S3) to a second terminal (409) of the measuring element (406) and the second terminal (409) of the measuring element (406) is connected to earth.

4. System according to one of claims 1 or 2, in which the electronic measuring system has two electronic switches (S1-S2) and

- a first terminal (407) of the electronic measuring system (405) is connected by way of a first switch (S1) to a first terminal (409) of a measuring element (406),
- a second terminal (408) of the electronic measuring system (405) is connected by way of a second switch (S2) to the first terminal (409) of the measuring element (406),
- the second terminal (409) of the measuring element (406) is connected to earth.

5. System according to one of the preceding claims, in which the domestic appliance is a cooking appliance or oven.

6. Method for measuring the resistance of three temperature-dependent resistors, which are arranged in the form of a star circuit and which are part of a core temperature sensor of a system according to one of the preceding claims,

   - in which the three resistors are electrically contacted by way of three terminals using electronic switches in the electronic measuring system and
   - in which the resistance values of the three resistors are determined at different points in time on the basis of different measurements.

7. Method according to claim 6, in which associated temperature values are measured for the determined resistance values.

8. Method according to claim 7, in which a cooking appliance is controlled on the basis of the temperature values.

**Revendications**

1. Système présentant

   - une sonde de température multi-coeur avec un montage (401) pour la mesure de trois résistances (A, B, C) dépendant de la température et
   - un appareil électroménager présentant une électronique de mesure (405) ainsi qu'une possibilité de mise en contact sous forme d'une prise femelle tripolaire ou d'une fiche tripolaire pour la sonde de température multi-coeur (401),
   - les trois résistances (A, B, C) pouvant être mises en contact par trois connexions (402-404) avec l'électronique de mesure (405),
   - les trois résistances (A, B, C) étant agencées en forme de montage en étoile (401),

   dans lequel une broche de chacune des trois résistances (A, B, C) est raccordée avec un noeud en étoile et l'autre broche respective de chacune des trois résistances (A, B, C) l'est avec l'une des trois connexions (402-404),
   **caractérisé en ce que**

   - au moyen d'un commutateur électronique (S1-S2 ou S1-S3) de l'électronique de mesure (405), les trois résistances (A, B, C) peuvent être raccordées par leurs connexions (402-404),
   - à l'aide de différentes mesures à différents moments au moyen de l'électronique de mesure (405) les valeurs de résistance des résistances (A, B, C) peuvent être définies,
   - l'une des connexions (402) est raccordée au potentiel de masse et
   - au moyen de l'électronique de mesure (405) les connexions peuvent être raccordées par deux commutateurs électroniques (S1, S2) de telle sorte que les valeurs de résistance de mesure R12, R23 et R13 pour les trois résistances A, B et C peuvent être déterminées de la manière suivante:

$$R13 = A + C$$

$$R23 = B + C$$

$$R123 = C + (A \parallel C)$$

   ainsi que
   - sur base des valeurs de résistance de mesure R12, R23 et R123, les trois valeurs de résistance A, B et C peuvent être déterminées de la manière suivante:

$$A = R13 - C,$$

$$B = R23 - C,$$

$$C = R123 - \sqrt{R123^2 - R123 \cdot R13 + R23 \cdot R13 - R23 \cdot R123}$$

- ou au moyen de l'électronique de mesure, les connexions peuvent être raccordées par trois de telle sorte que les valeurs de résistance de mesure R12, R23 et R123, peuvent être déterminées de la manière suivante:

$$R12 = A + B$$

$$R23 = A + C$$

$$R123 = C + (A \parallel B)$$

ainsi que
- sur base des valeurs de résistance de mesure R12, R23 et R123, les trois valeurs de résistance A, B et C peuvent être déterminées de la manière suivante:

$$A = \sqrt{R12 \cdot (R23 - R123)}$$

$$B = R12 - A$$

$$C = R23 - A.$$

2. Système selon la revendication 1, dans lequel les trois résistances dépendant de la température sont des conducteurs à chaud ou des conducteurs à froid.

3. Système selon l'une des revendications précédentes, dans lequel l'électronique de mesure présente trois commutateurs électroniques (S1-S3) et

- une première connexion (407) de l'électronique de mesure (405) est raccordée par un premier commutateur (S1) à la première connexion (409) d'un élément de mesure (406),
- une deuxième connexion (408) de l'électronique de mesure (405) est raccordée par un deuxième commutateur (S2) à la première connexion (409) de l'élément de mesure (406),
- la deuxième connexion (408) de l'électronique de mesure (405) est raccordée par un troisième commutateur (S3) à la deuxième connexion (409) de l'élément de mesure (406) et la deuxième connexion (409) de l'élément de mesure (406) l'est à la masse.

4. Système selon l'une des revendications 1 ou 2, dans lequel l'électronique de mesure présente deux commutateurs électroniques (S1-S2) et

- une première connexion (407) de l'électronique de mesure (405) est raccordée par un premier commutateur (S1) à la première connexion (409) d'un élément de mesure (406),
- une deuxième connexion (408) de l'électronique de mesure (405) est raccordée par un deuxième commutateur (S2) à la première connexion (409) de l'élément de mesure (406),
- la deuxième connexion (409) de l'élément de mesure (406) est raccordée à la masse.

5. Système selon l'une des revendications précédentes dans lequel l'appareil électroménager est un appareil de cuisson ou un four.

6. Procédé de détermination de résistance de trois résistances dépendant de la température agencée en montage en étoile et qui font partie d'une sonde de température à coeur d'un système selon l'une des revendications précédentes,

    - dans lequel les trois résistances sont mises en contact électronique par trois connexions au moyen de commutateurs électroniques de l'électronique de mesure et
    - dans lequel à l'aide de différentes mesures à différents moments les valeurs de résistance des trois résistances sont déterminées.

7. Procédé selon la revendication 6, dans lequel pour les valeurs de résistance déterminées, on définit des valeurs de température associées.

8. Procédé selon la revendication 7, dans lequel un appareil de cuisson est commandé à l'aide des valeurs de température.

Fig.1

Fig.2

Fig.3

Fig.6

Fig.5

Fig.4

20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 6930966 T2

- DE 102009058387 A1